**Europäisches Patentamt**

**European Patent Office**

**Office européen des brevets**

(19)

(11) Veröffentlichungsnummer: **0 089 672**
**B1**

(12) **EUROPÄISCHE PATENTSCHRIFT**

(45) Veröffentlichungstag der Patentschrift:
15.01.86

(21) Anmeldenummer: 83102801.4

(22) Anmeldetag: 21.03.83

(51) Int. Cl.⁴: **H 01 B 13/02,** D 07 B 3/00,
**G 02 B 6/04**

(54) **Rohrspeicher für die SZ-Verseilung.**

(30) Priorität: 23.03.82 DE 3210611

(43) Veröffentlichungstag der Anmeldung:
28.09.83 Patentblatt 83/39

(45) Bekanntmachung des Hinweises auf die Patenterteilung:
15.01.86 Patentblatt 86/3

(84) Benannte Vertragsstaaten:
AT BE CH DE FR GB IT LI SE

(56) Entgegenhaltungen:
DE-A-2 411 151
DE-C-682 267

(73) Patentinhaber: Siemens Aktiengesellschaft, Berlin und München Wittelsbacherplatz 2, D-8000 München 2 (DE)

(72) Erfinder: Oestreich, Ulrich, Dipl.- Ing., Karl-Witthalm- Strasse 15, D-8000 München 70 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf einen Rohrspeicher für die SZ-Verseilung von elektrischen und/oder optischen Verseilelementen.

Verseileinrichtungen dieser Art sind beispielsweise aus der DE-C1 682 267 bekannt, wobei am Ausgang des Rohrspeichers eine sich drehende Verseilscheibe vorgesehen ist.

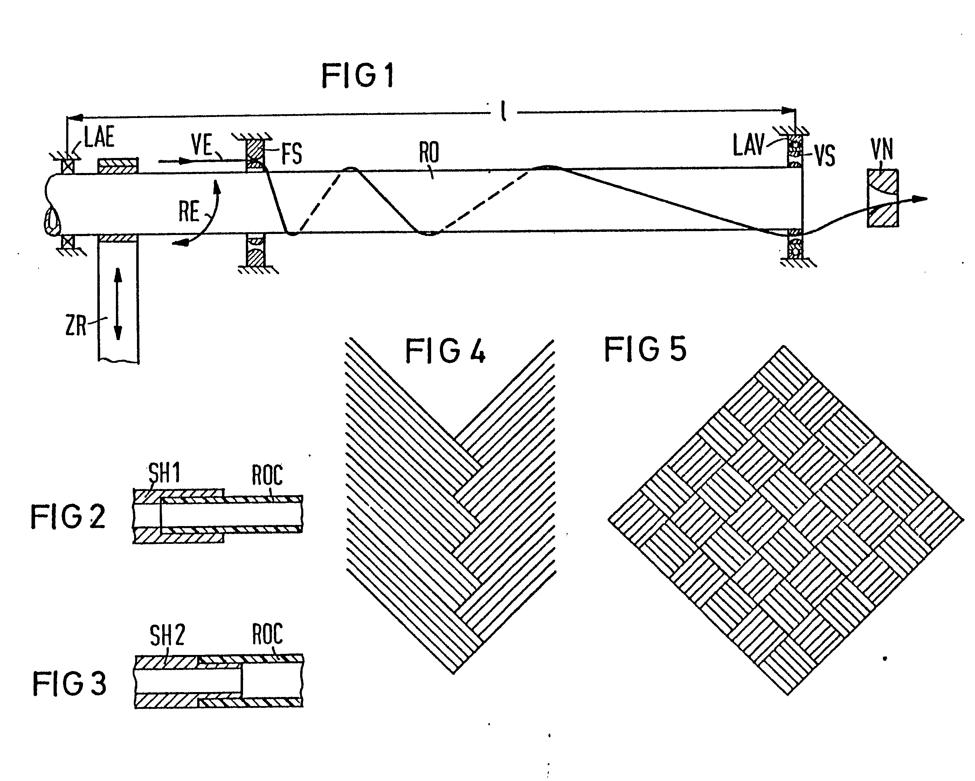

Der grundsätzliche Aufbau einer derartigen Verseileinrichtung ist in Fig. 1 dargestellt, wobei der als Führungs- und Speicherkörper dienende Rohrspeicher mit RO bezeichnet ist.

Über eine reversibel arbeitende Antriebseirichtung (z.B. in Form eines Zahnriemens ZR) wird (wie durch den Pfeil RE angedeutet) der Rohrspeicher RO abwechselnd für eine bestimmte Zeitdauer in der einen bzw. entgegengesetzten Richtung gedreht. Der Antrieb kann beispielsweise über ein auf der Verlängerung des Rohrspeichers RO angebrachtes Zahnrad erfolgen, das von einem Zahnriemen bewegt wird. Die Verseilelemente, von denen im vorliegenden Beispiel nur eines dargestellt und mit VE bezeichnet ist, werden über eine feststehende, eingangsseitige Führungslochscheibe FS geführt, welche eine entsprechende Anzahl von axial verlaufenden Bohrungen zur Aufnahme der Verseilelemente VE aufweist. Diese Führungslochscheibe FS ist an ihrer Außenseite mit einem entsprechenden Rahmen oder Gehäuse fest verbunden. Am Ausgang des Rohrspeichers RO ist eine an ihrer Außenseite über ein Lager LAV drehbar gelagerte, mit dem Rohrspeicher RO fest verbundene, ggf. auch getrennt angetriebene, Verseilscheibe VS vorgesehen, die entsprechende axiale Bohrungen zur Aufnahme der Verseilelemente VE aufweist. Die Verseilelemente VE werden am Ausgang der SZ-Verseileinrichtung über einen Verseilnippel VN geführt. Das eingangsseitige Lager ist mit LAE bezeichnet und die "Einspannlänge" des Rohrspeichers RO sei 1.

Je nach Reibschluß rollen die zugeführten Verseilelemente VE auf der Außenfläche des rotierenden Rohrspeichers RO ab und übertragen das dabei entstehende Drehmoment von den Stellen des stärksten Abrollens im Bereich der Führungslochscheibe FS auf Stellen schwächeren Abrollens im Bereich der Verseilscheibe VS. Da die Verseilscheibe VS selbst eine Abrollbremse darstellt, werden je nach Verteilung der Reibkräfte Drehmomente vom Einlaufbereich bei FS auf den Verseilbereich übertragen und zwar je nach der Torsionssteifigkeit der Verseilelemente VE schneller oder langsamer. Im Verseilbereich werden die Bremsmomente an der Verseilscheibe VS direkt oder verzögert kompensiert, so daß die Verseilung selbst mit geringer oder gar keiner Torsion erfolgt. Störend für die Verteilung der Verseilelemente auf dem Rohrspeicher und den Verseilvorgang selbst sind zu hohe Reibkräfte der normalerweise aus Stahl bestehenden Rohrspeicher. Zum einen führen sie zu einer vom Speicherinhalt abhängigen Modulation der Kräfte am Verseilpunkt, zum anderen bewirken sie eine unter Umständen zu starke Konzentration der Speicherbeseilung an der Einlaufseite. Diese kann ggf. durch zusätzliche Maßnahmen, z.B. durch ein in der Länge angepaßtes ruhendes Rohrstück oder andere Mittel bekämpft werden.

Eine weitere Schwierigkeit beim Betrieb derartiger Rohrspeicher ist darin zu sehen, daß die polaren Trägheitsmomente der Rohre für ein verzugsarmes Umschalten vielfach unerwünscht groß sind. Außerdem führt das hohe spezifische Gewicht vor allem bei größeren Längen zu einem unerwünschten Durchhängen der Rohre und zu niedrigen Resonanzfrequenzen, die noch im Bereich der Betriebsdrehzahlen liegen können.

Dies gilt auch dann, wenn der Rohrspeicher aus Stahl mit einer Kunststoffbeschichtung, beispielsweise aus Fluor-Aethylen-Propylen, bestehen, wie es aus der DE-A1-2 411 151 bekannt ist.

Der vorliegenden Erfindung, welche sich auf einen Rohrspeicher der eingangs genannten Art bezieht, liegt die Aufgabe zugrunde, mit einfachen Mitteln unerwünscht hohe Reibkräfte zwischen den Verseilelementen und dem Rohrspeicher zu vermeiden und zugleich das polare Trägheitsmoment und das spezifische Gewicht zu verringern.

Gemäß der Erfindung wird dies bei einer Vorrichtung der eingangs genannten Art dadurch erreicht, daß das Material des Rohrspeichers aus mit ausgehärteten, harten Harzen gebundenen Fasermaterial besteht.

Während die Reibung zwischen (glattem) Stahl und den Kunststoffen der Verseilelemente (insbesondere bei weicheren Kunststoffen) relativ hoch ist, ergeben z.B. epoxydharzgetränkte Fasern eine Verringerung der Reibung zwischen den Verseilelementen und dem Rohrspeicher. Das polare Trägheitsmoment der Rohrspeicher ist bei der Erfindung im Vergleich zu Stahlrohren wesentlich kleiner und beträgt bei sonst gleichen Abmessungen nur etwa ein Viertel dieses Wertes, womit der Umkehrbeschleunigung wesentlich höhere Grenzen gesetzt sind. In folge des geringeren spezifischen Gewichtes ist das Durchhängen auch längerer Rohre wesentlich kleiner und entsprechend höher liegen auch die Resonanzfrequenzen für Querschwingungen des als zweiseitig eingespannt zu betrachtenden Rohres.

Bevorzugt können als Fasermaterial Kohlenstoffasern verwendet werden, die neben ihrer besonders günstigen Festigkeitseigenschaften auch den Vorteil bieten, daß sie durch ihre selbstschmierenden Eigenschaften die Reibung wesentlich verkleinern.

Sonstige Weiterbildungen der Erfindung sind in den abhängigen Ansprüchen wiedergegeben.

Zur Verdeutlichung der erfindungsgemäßen Lösung diene die nachfolgende kurze theoretische Betrachtung.

Es sei

f in (m) die Durchbiegung des Rohrspeichers RO unter eigenem Gewicht;

l in (m) die Länge zwischen zwei Auflagepunkten

D, d in (m) der Außen- bzw. Innen-Durchmesser des Rohrspeichers RO;

E in ($N/m^2$) der E-Modul des Rohrspeichers RO;

$$\gamma \ \text{in} \left(\frac{kg}{m^3} = \frac{N \cdot s^2}{m^4}\right)$$

das spezifische Gewicht des Materials des Rohrspeichers RO;
P in (N) die Gewichtskraft
J in ($m^4$) das Trägheitsmoment
g die Erdbeschleunigung = 9,81 ($m/s^2$)
Es gilt

$$f = \frac{P}{E \cdot J} \cdot \frac{5 \cdot 1^3}{384} \ ,$$

wobei

$$P = (D^2 - d^2) \cdot \frac{\pi}{4} \cdot \gamma \cdot g \cdot 1$$

und

$$J = \frac{(D^4 - d^4) \cdot \pi}{64}$$

sind. Eingesetzt ergibt sich

$$f = \frac{\gamma \cdot g \cdot 1^4 \cdot 80}{E \ (D^2 + d^2) \cdot 384}$$

Bezieht man für ähnliche Anordnungen die Durchbiegung auf die Länge, so wird

$$\frac{f}{1} = \frac{80}{384} \cdot \frac{\gamma \cdot g}{E} \cdot \frac{1^3}{D^2 + d^2} \left[\frac{N \cdot m^2}{m^3 \cdot N} \cdot \frac{m^3}{m^2}\right]$$

Man erkennt:
a) Die Länge I geht mit einer um den Wert Eins höheren Potenz ein als der Durchmesser D bzw. d des Rohrspeichers RO, so daß einfache linear proportionale Vergrößerungen des Rohrspeichers nicht möglich sind. Mit zunehmender Länge wächst die relative Durchbiegung
b) Es ist sinnvoll, d → D gehen zu lassen, die Wandstärke des Rohrspeichers RO also möglichst dünnwandig zu machen. Zweckmäßige Werte für die Wandstärke liegen zwischen 0,5 und 3 mm. Vorzugsweise sind Werte um 1,5mm einsetzbar.
c) Das Verhältnis von

$$\frac{\gamma}{E}$$

sollte so klein wie möglich sein.
Für Stahl gilt etwa

$$\frac{\gamma}{E} = \frac{7800}{2 \cdot 10^{11}} = 3,9 \cdot 10^{-8} \left[\frac{s^2}{m^2}\right] \ ,$$

FIG9/20

dagegen für durch Epoxydharz in einer Harzmatrix gebundene Kohlenstoffasern

$$\frac{\gamma}{E} = \frac{1500}{1,5 \cdot 10^{11}} \left[\frac{kg}{m^3} \cdot \frac{m^2}{N} = \frac{s^2}{m^2}\right] = 1 \cdot 10^{-8} \ ,$$

womit erhebliche Verlängerungen des Rohrspeichers kompensierbar sind.

Ähnliches gilt für die Eigenfrequenz $\omega$. Hier ist

$$\omega = \frac{\hat{\iota}^4}{4} \cdot \frac{\sqrt{D^2 + d^2}}{\iota^2} \cdot \sqrt{\frac{E}{\gamma}} \quad \left[\frac{m}{m^2} \cdot \left(\frac{N}{m^2}\right)^{\frac{1}{2}} \cdot \left(\frac{m^4}{N \cdot s^2}\right)^{\frac{1}{2}} = \frac{1}{s}\right]$$

Dieser Wert kann durch Einführung des aus Kohlenstofffasern aufgebauten Rohrspeichern etwa um den Wert 2 angehoben werden.

Die Fassung der Rohre sollte mittels aufgeklebter Stahlhülsen erfolgen. In Fig. 2 ist eine erste Ausführungsform hierzu dargestellt, wobei innen eine eben durch gehende Fläche erzielt wird, während außen die Stahlhülse SH1 das aus Kohlenstoffasern gebildete Rohr ROC umfaßt. Bei der Ausführungsform nach Fig. 3 ist die Situation umgekehrt, weil hier das Rohr ROC auf der außen mit einer Eindrehung versehenen Stahlhülse SH2 aufliegt.

Die Stahlhülsen SH1 bzw. SH2 nach Fig. 2 oder 3 stellen gleichzeitig denjenigen Bereich dar, in welchem die Lager LAE und LAV nach Fig. 1 angeordnet werden. Auch ist es zweckmäßig, das dem Zahnriemen ZR zugeordnete und auf der Oberfläche des Rohrspeichers RO nach Fig. 1 fest angebrachte Zahnrad auf dem Außenmantel der Stahlhülse SH1 bzw. SH2 anzuordnen.

In diesem Zusammenhang ist besonders die Ausführungsform nach Fig. 2 vorteilhaft, weil sich hier die Stahlhülse SH1 über eine größere Länge auf der Außenseite des Rohrspeichers ROC erstreckt. Weiterhin hat diese Ausführungsform den Vorteil, daß die lichte Öffnung des Rohrspeichers ROC durch die aufgebrachte Stahlhülse SH1 nicht beeinträchtigt wird. Dies ist dann von Bedeutung, wenn durch das Innere des Rohrspeichers ROC andere (bereits verseilte) Aderbündel oder sonstige Kernelemente (z.B. zugfeste Seelenelemente) hindurchgeführt werden sollen.

Die Ausführungsform nach Fig. 3 verringert zwar den Querschnitt im Inneren etwas; es ist jedoch in diesem Fall an der Außenseite keine Vergrößerung der Kontur vorhanden.

Es ist auch möglich, die beiden Lösungen nach Fig. 2 und Fig. 3 miteinander zu kombinieren, d.h. eine geringfügige Vergrößerung sowohl der lichten Weite als auch des äußeren Durchmessers Vorzunehmen.

Die einzelnen Fasern, welche zur Bildung des Rohrspeichers herangezogen werden, sind zweckmäßig in Form von Bandern aufgebaut, die miteinander verflochten und durch eine Harzmatrix aus im Endzustand harten Harzen gebunden werden. Im einzelnen kann hierzu ein partielles Geflecht angewendet werden, d.h. eine Ausführungsform, wie sie in Fig. 4 schematisch angedeutet ist. Die einzelnen parallelen Linien zeigen (als Abwicklung des Umfangs) die Richtung der unteieinander parallelen Fasern jeweils einer Bahn an.

Eine gleichmäßigere und mechanisch besonders feste Ausführungsform ist in Fig. 5 dargestellt, welche (in der Abwicklung) ein vollständiges Geflecht zeigt. Die verschiedenen etwa bandförmigen Einzelbestandteile sind alle gleich groß und insgesamt ergibt sich ein etwa schachbrettartiges Muster.

Zur Verbesserung der Festigkeitseigenschaften weiden zur Bildung des Rohrspeichers vorteilhaft mehrere der in Fig. 4 bzw. Fig. 5 dargestellten Geflechtlagen übereinander aufgebracht. Bei mehrlagiger Anordnung ist es Zweckmäßig, die verschiedenen Geflechtlagen in unterschiedlichem Sinn verlaufen zu lassen, um nach allen Richtungen eine besonders gleichmäßige Verteilung dei Festigkeitseigenschaften zu erzielen.

Zur Erzielung besonders niedriger Reibungsweite kann die Tatsache ausgenützt werden, daß die Oberfläche eines so aufgebauten Rohrspeichers infolge der durch die Fasern bedingten rauhen Struktur dei Oberfläche eine Erniedrigung der Reibung ergibt. Dies hat seine Ursache im wesentlichen darin, daß die zu verseilenden Adern nicht vollständig aufliegen, sondern nur abschnittsweise entsprechend der Oberflächenstruktur des Geflechtes bzw. entsprechend dem Verlauf der Faserbahnen.

Je nach dem Aufbau der zu verseilenden Adern kann es aber auch zweckmäßig sein, den Rohrspeicher durch Abschleifen an der Oberfläche völlig glatt zu halten. Dabei treten in Zusammenhang mit Verwendung von Kohlenstoff-Fasern besondere Vorteile insofern auf, als die selbstschmierend wirkenden Kohlenstoff-Fasern in unmittelbarem Kontakt mit den Außenhüllen der zu verseilenden Adern kommen und dadurch die Reibung vermindern.

Anstelle von hochfesten (zugfesten) Kohlenstoff-Fasern können ggf. auch Aramidfasern (z.B. unter dem Handelsnamen "KEVLAR" der Fa. Du Pont bekannte Ausführungsformen) verwendet werden. Die damit erzielbaren Festifkeitseigenschaften sind jedoch vergleichen mit Kohlenstoff-Fasern nicht ganz so günstig. Dies hat seine Ursache u. a. darin, daß die Bindung durch das Epoxydharz nicht die vorteilhaften Weite erreicht, welche bei entsprechenden Kohlenstoff-Fasern erzielbar sind.

Als Harze können vor allen Dingen solche verwendet werden, welche ausgehärtet besonders hart sind. Hierzu sind vor allem Epoxydharze geeignet. Es ist ggf. auch möglich Polyesterharze oder Polyesterimidharze zu verwenden.

Bei Aufbringung der Fasern muß, um sie bis zum Aushälten in ihrer Lage zu sichern, ein leichtes und entsprechend dünnwandiges Trägerrohr verwendet werden, auf welches die einzelnen Faserlagen aufgelegt werden.

Beim Rohrspeicher wird zweckmäßig der Wert von $\frac{\gamma}{E}$ Zwischen $0{,}9.\ 10^{-8}$ und $1{,}4.\ 10^{-8}$ $\left(\frac{s}{m^2}\right)$,

0 089 672

vorzugsweise um 1,1. $10^{-8}$ ($\frac{s}{m^2}$)

gewählt. Die Länge l des Rohrspeichers kann Vorteilhaft zwischen 1 und 4 m, vorzugsweise um 3 m liegen.
Die Verseilelemente nach der Erfindung können bevorzugt für den Aufbau elektrischer und/oder optischer Kabel verwendet werden.

## Patentansprüche

1. Rohrspeicher für die SZ-Verseilung von elektrischen und/oder optischen Verseilelementen (VE), dadurch gekennzeichnet, daß das Material des Rohrspeichers (RO) aus mit ausgehärteten, harten Harzen gebundenen Fasermaterial besteht.

2. Rohrspeicher nach Anspruch 1, dadurch gekennzeichnet, daß die Fassung der Enden Les Rohrspeichers (RO) durch aufgeklebte Stahlhülsen (SH1, SH2) vorgenommen ist.

3. Rohrspeicher nach einem der vorhergehenden Ansprüche, dadurch gekennzeichnet, daß beim Rohrspeicher (RO) der Wert von $\frac{\gamma}{E}$ zwischen $0,9 \cdot 10^{-8}$ und $1,4 \cdot 10^{-8}$ ( $\frac{s^2}{m^2}$ ), vorzugsweise um $1,1 \cdot 10^{-8}$, gewählt ist, wobei $\gamma$ das spezifische Gewicht des Materials des Rohrspeichers in (kg/m$^3$) und E den Elastizitätsmodul in (N/m$^2$) bedeutet.

4. Rohrspeicher nach einem der vorhergehenden Ansprüche, dadurch gekennzeichnet, daß die Stärke der Rohrwandung des Rohrspeichers (RO) zwischen 0,5 und 3 mm, vorzugsweise um 1,5 mm, gewählt ist.

5. Rohrspeicher nach einem der vorhergehenden Ansprüche, dadurch gekennzeichnet, daß die Länge des Rohrspeichers zwischen 1 und 4 m, vorzugsweise um 3 m gewählt, ist.

6. Rohrspeicher nach einem der vorhergehenden Ansprüche, dadurch gekennzeichnet, daß als Harzmatrix Epoxydharz verwendet ist.

7. Rohrspeicher nach einem der vorhergehenden Ansprüche dadurch gekennzeichnet, daß das Material des Rohrspeichers (RO) aus Kohlenstoffasern besteht.

8. Rohrspeicher nach einem der Ansprüche 1 bis 6, dadurch gekennzeichnet, daß das Material des Rohrspeichers (RO) aus Aramidfasern besteht.

9. Rohrspeicher nach einem der vorhergehenden Ansprüche, dadurch gekennzeichnet, daß die den Rohrspeicher (RO) bildenden Fasern auf ein leichtes, dünnes Trägerrohr aufgebracht sind.

## Claims

1. A tube accumulator for the SZ-stranding of electrical and/or optical stranding elements (VE), characterised in that the material of the tube accumulator (RO) consists of a fibrous material which is bonded by hardened hardenable resins.

2. A tube accumulator as claimed in Claim 1, characterised in that the ends of the tube accumulator (RO) are supported by stuck-on steel sleeves (SH1, SH2).

3. A tube accumulator as claimed in one of the preceding Claims, characterised in that for the tube accumulator (RO), the value of $\frac{\gamma}{E}$ is selected between $0.9 \times 10^{-8}$ and $1.4 \times 10^{-8}$ ( $\frac{s^2}{m^2}$ ), preferably about $1.1 \times 10^{-8}$ where $\gamma$ is the specific gravity of the material of the tube accumulator in (kg/m$^3$) and E is the modulus of elasticity in (N/m$^2$).

4. A tube accumulator as claimed in one of the preceding Claims characterised in that the thickness of the tube wall of the tube accumulator (RO) is between 0.5 and 3 mm, preferably about 1.5 mm.

5. A tube accumulator as claimed in one of the preceding Claims, characterised in that the length of the tube accumulator is between 1 and 4 m and is preferably about 3 m.

6. A tube accumulator as claimed in one of the preceding Claims, characterised in that epoxy resin is used as the resin matrix.

7. A tube accumulator as claimed in one of the preceding Claims, characterised in that the material of the tube accumulator (RO) consists of carbon fibres.

8. A tube accumulator as claimed in one of Claims 1 to 6, characterised in that the material of the tube accumulstor (RO) consists of aramide fibres.

9. A tube accumulator as claimed in one of the preceding Claims, characterised in that the fibres forming the tube accumulator (RO) are applied onto a light thin carrier tube.

0 089 672

## Revendications

1. Accumulateur tubulaire pour le câblage SZ d'éléments de câblage électriques et/ou optiques, caractérisé que le matériau de l'accumulateur tubulaire (RO) est constitué par un matériau fibreux réuni par des résines fermes durcies.

2. Accumulateur tubulaire suivant la revendication 1, caractérisé par le fait que l'appui des extrémités de l'accumulateur tubulaire (RO) est réalisé au moyen de douilles en acier (SH1, SH2) collées.

3. Accumulateur tubulaire suivant l'une des revendications précédentes, caractérisé par le fait que dans le cas de l'accumulateur tubulaire (RO), la valeur de $\dfrac{\gamma}{E}$

est choisie égale à une valeur comprise entre $0,9 \cdot 10^{-8}$ et $1,4 \cdot 10^{-8}$ $(s^2/m^2)$ de préférence égale à environ à $1,1 \cdot 10^{-8}$, $\gamma$ représentant le poids spécifique du matériau de l'accumulateur tubulaire en $(kg/m^3)$ et E représentant le module d'élasticité en $(N/m^2)$.

4. Accumulateur tubulaire suivant l'une des revendications précédentes, caractérisé par le fait que l'épaisseur de la paroi tubulaire de l'accumulateur tubulaire (RO) est choisie égale à une valeur comprise entre 0,5 et 3 mm, et égale de préférence à environ 1,5 mm.

5. Accumulateur tubulaire suivant l'une des revendications précédentes, caractérisé par le fait que la longueur de l'accumulateur tubulaire est choisie égale à une valeur comprise entre 1 et 4 m et égale de préférence à environ 3 m.

6. Accumulateur tubulaire suivant l'une des revendications précédentes, caractérisé par le fait qu'on utilise une résine époxy en tant que matrice de résine.

7. Accumulateur tubulaire suivant l'une des revendications précédentes, caractérisé par le fait que le matériau de l'accumulateur tubulaire (RO) est constitué par des fibres de carbone.

8. Accumulateur tubulaire suivant l'une des revendications 1 à 6, caractérisé par le fait que le matériau de l'accumulateur tubulaire (RO) est constitué par des fibres d'aramide.

9. Accumulateur tubulaire suivant l'une des revendications précédentes, caractérisé par le fait que les fibres constituant l'accumulateur tubulaire (RO) sont installées sur un tube de support léger et mince.

6

# FIG 1

$l$

LAE   VE   FS   RO   LAV   VS   VN

RE

ZR

# FIG 2

SH1   ROC

# FIG 3

SH2   ROC

# FIG 4

# FIG 5

0 089 672